## Europäisches Patentamt

## European Patent Office

## Office européen des brevets

(19)

(11) Veröffentlichungsnummer: **0 044 415**
**B1**

(12) **EUROPÄISCHE PATENTSCHRIFT**

(45) Veröffentlichungstag der Patentschrift:
24.10.84

(21) Anmeldenummer: 81104745.5

(22) Anmeldetag: **20.06.81**

(51) Int. Cl.³: **B 41 J 23/18,** B 41 J 3/10,
B 41 J 19/14, B 41 J 23/14,
F 16 H 35/02

(54) Pendelmechanismus für geradlinige Hin- und Herbewegungen eines Matrixdrucker-Schlittens bzw.-Wagens.

(30) Priorität: 17.07.80 US 169595

(43) Veröffentlichungstag der Anmeldung:
27.01.82 Patentblatt 82/4

(45) Bekanntmachung des Hinweises auf die Patenterteilung:
24.10.84 Patentblatt 84/43

(84) Benannte Vertragsstaaten:
CH DE FR GB IT LI NL SE

(56) Entgegenhaltungen:
DE - A - 2 260 374
DE - C - 520 268
DE - C - 561 406
DE - U - 1 946 558

Ingenious mechanisms, Vol. I, Industrial Press Inc., New York S. 258, 259, 17. Repr.
Mechanisms, Winkages and mechanical Control, Mac Graw-Hill Comp., New York, 1965, S. 241-245

(73) Patentinhaber: **Mannesmann Tally Corporation, 8301 South 180th Street, Kent Washington 98031 (US)**

(72) Erfinder: **Bringhurst, Edward D., 10615 2nd Ave. South, Seattle, Washington 98168 (US)**
Erfinder: **Miller, Swend L., 21125 125th S.E., Kent, Washington 98031 (US)**

(74) Vertreter: **Flaig, Siegfried, Dipl.-Ing. (FH), Mannesmann AG Mannesmannufer 2, D-4000 Düsseldorf (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Pendelmechanismus für geradlinige Hin- und Herbewegungen eines Matrixdrucker-Schlittens bzw. Matrixdrucker-Wagens mit Druckhämmern, mit einem Antrieb zur Bewegung hin und her in Zeilenrichtung bei konstanter Geschwindigkeit und mit einem schrittweise vorschiebbaren Aufzeichnungsträger senkrecht zur Zeilenrichtung.

Es sind schon Punktmatrix-Drucker der verschiedensten Ausführungsformen vorgeschlagen worden und sind auch in Betrieb. Allgemein enthalten Punktmatrixdrucker eine Mehrzahl von punktbildenden Elementen, deren Abdrucke auf einer Linie liegen, die senkrecht zur Richtung der Bewegung des Aufzeichnungsträgers durch den Drucker verläuft. Da die Papierbewegung normalerweise «vertikal» ist, liegen die Abdrucke gewöhnlich auf einer horizontalen Linie. Auf der Seite des Aufzeichnungsträgers befindet sich im Abstand von den punktbildenden Elementen eine Walze und zwischen den punktbildenden Elementen und dem Aufzeichnungsträger eine Farbband. Während des Druckens werden die punktbildenden Elemente auf der Horizontallinie, die sie bestimmen, hin- und herbewegt. Diese punktbildenden Elemente werden an vorbestimmten Stellen zur Bildung eines Punktes betätigt, je nach dem, welches Abbild oder welche Zeichen gedruckt werden sollen. Eine Reihe der auf diese Weise gebildeten Punktreihen bildet eine Zeichenreihe. Der Aufzeichnungsträger wird selbstverständlich am Ende einer jeden Punktreihe vorwärtsbewegt.

Obgleich die vorliegende Erfindung insbesondere für den Einsatz in Verbindung mit Punktmatrix-Zeilendruckern zwecks Hin- und Herbewegung oder Oszillation der punktbildenden Elemente vorgesehen ist, kann sie jedoch auch für die Hin- und Herbewegung von Wagen, Schlitten oder dgl. Baugruppen in anderen Einrichtungen, Maschinen oder dgl. verwendet werden, falls diese eine Hin- und Herbewegung bei konstanter Geschwindigkeit zweckmässig erscheinen lassen.

Gewöhnlich fallen Punktmatrix-Drucker in zwei Kategorien. Die erste Kategorie enthält Punktmatrix-Zeilen-Drucker, bei denen lediglich die punktbildenden Elemente bewegt werden (Nadeldruckköpfe). Die zweite Kategorie enthält Punktmatrix-Zeilen-Drucker, bei denen die Betätigungsmechanik mit den punktbildenden Elementen zusammen bewegt werden. Es ist jedoch gleichgültig um welche Ausführung es sich jeweils handelt, in jedem Fall ist der Teil der Druckmechanik, der bewegt werden muss, auf einem Wagen montiert und der Wagen selbst wird mittels einer hin- und hergehenden Einrichtung bewegt. Da sich die vorliegende Erfindung auf Wagenpendeleinrichtungen bezieht, ist sie für beide Kategorien von Punktmatrix-Druckern anwendbar.

In der Vergangenheit sind die unterschiedlichsten Ausführungen von Wagenpendeleinrichtungen für den Einsatz in Verbindung mit Punktmatrix-Druckern vorgeschlagen worden. Eine bekannte Ausführungsform enthält einen Schrittmotor, der betätigt wird, um die Schritte der Wagenbewegung auszuführen. Am Ende eines jeden Schrittes werden entsprechende Betätigungselemente zum Abdruck der Punkte erregt. Die Bewegung in zwei Richtungen erfolgt durch Schrittbewegung des Wagens erst in eine Richtung und dann in die entgegengesetzte Richtung. Ein Hauptproblem beim Einsatz von derartigen Schrittmotoren in Punktmatrix-Druckern ist die Beschränkung, die sie der Druckgeschwindigkeit auferlegen. Wegen dieser Begrenzung sind Versuche unternommen worden, andere Motorenausführungen, nämlich Gleichstrommotoren mit konstanter Drehzahl, zu verwenden.

Ein Problem beim Einsatz von Gleichstrommotoren mit konstanter Drehzahl liegt darin, dass Einrichtungen nach dem Stand der Technik für das Ankuppeln der Wellen dieser Motore an die Druckerwagen zu einer variablen Wagengeschwindigkeit geführt haben. Daraus ergibt sich, dass bei Wagenpendeleinrichtungen nach dem Stand der Technik, die Motoren mit konstanter Drehzahl verwendet, die Stellung des Druckerwagens laufend bestimmt und die Stellungsinformation zur Synchronisation der Erregung der Druckelementbetätigungen genutzt werden muss. Wird eine solche Synchronisation nicht vorgesehen, so ist eine genaue Stellungswiederholbarkeit der Druckelementbetätigungen nicht gewährleistet, und die gedruckten Zeichen sind verzerrt und/oder verschwimmen. Verzerrte und/oder verschwommene Zeichen sind jedoch nicht zulässig, wo ein hochqualitativer Druck erforderlich oder wünschenswert ist. Genauer gesagt, ist es für die Erzielung eines hochqualitativen Drucks erforderlich, dass der Punktmatrix-Drucker die Punkte in jeder Punktreihe in genau der gleichen Stellung positioniert. Sofern sich diese Genauigkeit nicht erreichen lässt, so verschwimmen die Zeichen und/oder werden auf andere Weise verformt.

Wagenbewegungseinrichtungen mit Schrittmotor ermöglichen auf der anderen Seite die gewünschte Punktpositionierungs-Wiederholbarkeit. Wie jedoch bereits oben festgestellt, sind diese Wagenpendelmechanismen langsam und somit unerwünscht. Bewegungseinrichtungen, die Gleichstrommotoren mit konstanter Drehzahl (oder andere Motoren mit konstanter Drehzahl) verwenden, sind zwar erheblich schneller, haben jedoch den Nachteil, dass sie eine nichtlineare Weg-Zeit-Kurve (oszillierende Bewegung) aufweisen, so dass relativ kostspielige Stellungsfühl- und/oder Regelkreise erforderlich sind, um die Punktstellung genau zu steuern.

Einige bekannte Systeme benötigen einen Präzisionsstellungsfühler. Andere bekannte Systeme (bei denen die Form der Weg-Zeit-Kurve bekannt und wiederholbar ist), kommen allerdings ohne einen Stellungsfühler aus. Im letzteren Fall lässt sich die elektronische Steuerung für den Punktdruck so regeln, dass der veränderliche Transport von Punkt zu Punkt ausgeglichen wird, vorausgesetzt, dass die Druckmechanik einen Abdruck bei kürzestem Abstand von Punkt zu Punkt erlaubt.

Mit anderen Worten ausgedrückt, bestimmt die kürzeste Transportzeit von Punkt zu Punkt, basierend auf der Druckmechanik, die Geschwindigkeit dieser Systeme während der längeren Perioden von Punkt zu Punkt wie auch während der kurzen Perioden von Punkt zu Punkt. Das bedeutet, dass die Gesamtgeschwindigkeit geringer ist als sie sein könnte, wenn die Transportzeit von Punkt zu Punkt konstant wäre. Offensichtlich ist es erforderlich, einen Pendelmechanismus für lineare Hin- und Herbewegungen in einem Drukker zu schaffen, der erheblich schneller ist als Wagenpendeleinrichtungen mit Schrittmotor, die jedoch keine relativ aufwendigen Stellungsfühleinrichtungen und Steuerungssysteme benötigt, um eine veränderliche Wagentransportbewegung auszugleichen.

Der Erfindung ist daher die Aufgabe zugrundegelegt, einen verbesserten Pendelmechanismus zu schaffen, der erheblich schneller ist als die bekannten Wagenpendeleinrichtungen mit Schrittmotor, jedoch keine relativ aufwendigen Stellungsfühleinrichtungen und Steuersysteme benötigt, andererseits für Drucker in dem Bereich, in dem die Punkte abgedruckt werden sollen, eine konstante Geschwindigkeit der Pendelbewegung bewirkt. Ausserdem soll der Pendelmechanismus in zwei Richtungen die konstante Geschwindigkeit für das bewegbare Organ bewirken.

Die gestellte Aufgabe wird dadurch gelöst, dass der Antrieb für die Hin- und Herbewegung mittels eines ersten, an einen Drehantrieb für konstante Drehgeschwindigkeit angeschlossenen elliptischen zweinockigen Antriebselementes zweiter Ordnung und mittels eines gleichgrossen zweiten elliptischen zweinockigen Antriebselementes zweiter Ordnung gebildet ist, dass das erste und das zweite elliptische zweinockige Antriebselement mit ihren Ellipsen- Hauptachsen in einer der Grundstellungen um 90° phasenversetzt zueinander stehen, dass Verbindungsmittel zum Antrieb des zweiten durch das erste elliptische zweinokkige Antriebselement vorgesehen sind und dass das zweite elliptische zweinockige Antriebselement mit einem exzentrisch befestigten Glied an das zu bewegende Organ angeschlossen ist. Die Vorteile dieses Pendelmechanismus' sind konstante Geschwindigkeit der Bewegungen in beiden Richtungen, erheblich schnellere Bewegungen gegenüber den Antrieben mit Schrittmotoren, ferner sind keine relativ aufwendigen Stellungsfühleinrichtungen und Steuersysteme nötig, ausserdem gestattet die Erfindung auch die Ausbildung gewisser von der Sinus-Kurve abweichender Bewegungsabläufe.

In Ausgestaltung der Erfindung ist vorgesehen, dass das erste und zweite elliptische Antriebselement als Verbindungsmittel jeweils eine Verzahnung aufweisen.

Eine andere Ausführungsform besteht darin, dass das Verbindungsmittel für das erste und zweite elliptische Antriebselement aus einem Zugmittel besteht.

Nach der weiteren Ausgestaltung der Erfindung ist vorgesehen, dass das Zugmittel ebenfalls mit einer Verzahnung versehen ist.

Die einzuhaltende konstante Geschwindigkeit wird auch dadurch unterstützt, dass gemäss einem weiteren Erfindungsmerkmal die Zähnezahlen des verzahnten Zugmittels sowie des ersten und des zweiten elliptischen Antriebselementes jeweils gerade sind.

In Ausgestaltung der Erfindung ist ferner vorgesehen, dass das exzentrisch auf dem zweiten elliptischen Antriebselement befestigte Glied aus einer Stange besteht.

Für die Befestigung dieser Stange ist ausserdem vorgesehen, dass an dem zweiten elliptischen Antriebselement für diese Anlenkung des Verbindungsmittels an das zu bewegende Organ des Druckers eine exzentrische Nebenachse vorgesehen ist.

Eine weitere Ausgestaltung der Erfindung geht dahin, dass auf der Welle, auf der das zweite elliptische Antriebselement drehfest angeordnet ist eine Ausgleichsmasse vorgesehen ist.

Äusserst exakte konstante Geschwindigkeiten des hin- und herzubewegenden Organs werden dadurch erzielt, dass die erzeugte Weg-Zeit-Kurve des zu bewegenden Organs des Druckers einem dreieckförmigen Verlauf angenähert ist.

Eine derartige weitestgehend dreieckförmige Weg-Zeit-Kurve wird nach der weiteren Ausgestaltung der Erfindung dadurch erreicht, dass der Faktor «a» für den Radius des ersten elliptischen Antriebselementes im Bereich von 1,007 und der in der Grundstellung entsprechende Faktor «b» für den Radius des zweiten elliptischen Antriebselementes im Bereich von 0,7688 gewählt ist.

Eine weitere Ausgestaltung der Erfindung besteht darin, dass an dem Druckerrahmen ein auf das Glied gerichteter Stellungsfühler angeordnet ist. Eine solche Fühleinrichtung ist vorgesehen, um festzustellen, zu welchem Zeitpunkt der Wagen die Endstellungen seiner Transportbewegung erreicht hat, wonach ein Synchronisierimpuls erzeugt wird, der den Beginn der Erregung für die Betätigung der punktbildenden Elemente in jeder Druckreihe steuert.

Die Umkehr der Bewegungsrichtung des zu bewegenden Organs wird ausserdem dadurch erleichtert, dass an den Endbereichen des Bewegungsweges des zu bewegenden Organs Dämpfungsmittel angeordnet sind.

Eine weitere Ausgestaltung der Erfindung besteht darin, dass als Massenausgleich für das zu bewegende Organ mittels einer Verbindungsstange an der Welle, auf der das angetriebene zweite elliptische Antriebselement drehfest angeordnet ist, ein Gegengewichtswagen befestigt ist.

Vorteilhaft ist ausserdem das zu bewegende Organ auf Biegestäben zu lagern.

Ausführungsbeispiele der Erfindung sind in der Zeichnung dargestellt und werden im folgenden näher beschrieben. Es zeigen

Fig. 1 eine perspektivische Darstellung der für die Erfindung wesentlichen Bauteile als Übersicht,

Fig. 2 ein Weg-Zeit-Diagramm für konstante lineare Geschwindigkeit des zu bewegenden Organs,

Fig. 3 eine bevorzugte Ausführungsform der Erfindung im Grundriss,

Fig. 4 die Hauptbauteile des erfindungsgemässen Pendelmechanismus in einer weiteren Ausführungsform im Aufriss,

Fig. 5 die Hauptbauteile des erfindungsgemässen Pendelmechanismus in einer weiteren Ausführungsform im Aufriss,

Fig. 6 das Prinzip der Erfindung mit den in der Beschreibung verwendeten mathematischen Ausdrücken,

Fig. 7 eine Darstellung der Erfindung im Prinzip mit weiteren in der Beschreibung verwendeten mathematischen Ausdrücken,

Fig. 8 eine Seitenansicht der in den Fig. 1 und 3 dargestellten Ausführungsform der Erfindung,

Fig. 9 einen horizontalen Schnitt IX – IX gemäss Fig. 8.

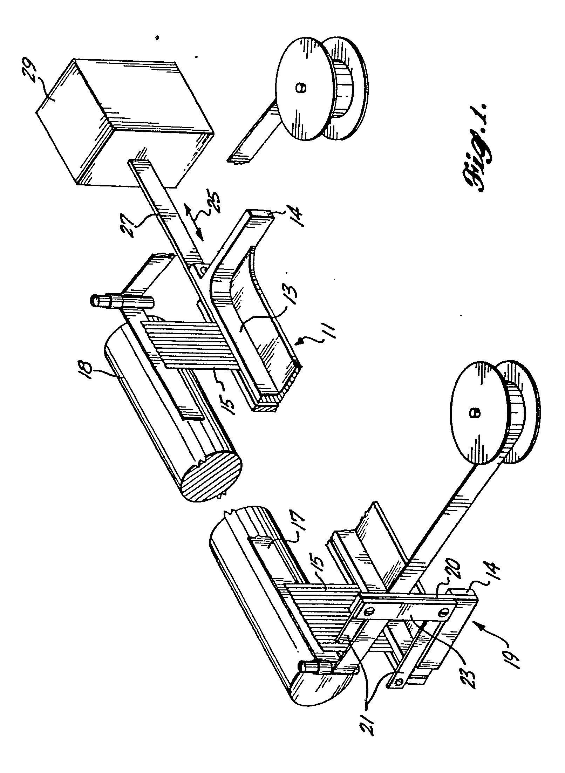

Mit Bezugnahme auf Fig. 1 werden die wesentlichen Bauteile eines Punktmatrix-Druckers mit dem Wagen 11 erläutert. Der Wagen 11 enthält ein Rahmenelement 13 zur Unterstützung einer Vielzahl vertikal angeordneter Druckhämmer 15. Die Druckhämmer 15 besitzen eine gemeinsame Basis, mit der sie am Rahmenelement 13 des Wagens 11 befestigt sind. Die gegenüberliegenden Enden der Druckhämmer 15 können sich in der nachstehend beschriebenen Weise vor- und zurückbewegen.

Auf der Vorderseite der beweglichen Enden eines jeden Druckhammers 15 befindet sich ein (nicht sichtbarer) Punktdruckamboss. Auf der rückwärtigen Seite jedes Druckhammers 15 (dem Beschauer zugewendet) sind die Druckhammerbetätigungen vorgesehen (nicht gezeichnet). Diese Druckhammerbetätigungen enthalten Magnetkreise, die die Druckhämmer 15 jeweils aus ihrer Ruhestellung ziehen und auf Kommando freigeben. Andererseits können die Druckhämmer 15 auf Befehl angezogen werden. Zur Betätigung der Druckhämmer 15 ist es bekannt, die unterschiedlichsten Magnetkreisausführungen mit Kombinationen von Dauermagneten und elektromagnetischen Einrichtungen einzusetzen. Welche Ausführungsform der Magnetkreise auch immer angewendet werden soll, so führt die Freigabe eines Druckhammers 15 jeweils zu einem punktförmigen Abdruck, bei dem der Punktdruckamboss ein Farbband 17 gegen den Aufzeichnungsträger, der beispielsweise aus einem perforierten Papierband besteht (nicht gezeigt) drückt. Der Aufzeichnungsträger wird durch eine Walze 18 gestützt. Die Walze, das Papier und das Farbband 17 sind ohne Ausnahme auf die herkömmliche Weise miteinander ausgerichtet.

Im linken Teil von Fig. 1 ist die Federstütze 19 sichtbar, die eine Seite des Wagens 11 unterstützt. Genauer gesagt besteht die Federstütze 19 aus einer vertikalen Stütze 20, die mit einem Arm 14 verbunden ist, der vom Rahmenelement 13 des Wagens 11 ausgeht. Ein Ende eines jeden Biegestabpaares 21 ist an der Federstütze 19 befestigt. Ein Biegestab 21 befindet sich praktisch oben an der Stütze 20 und der andere Biegestab 21 praktisch unten an der Stütze 20. Das Stützblech 23 überlagert die Enden der an der Stütze 20 befestigten Biegestäbe 21, um die Durchbiegung härter zu machen. Die anderen Enden der Biegestäbe 21 sind am Gehäuse des Druckers (in Fig. 1 nicht gezeigt) befestigt. Eine ähnliche Biegekonstruktion unterstützt die rechte Seite des Wagens 11.

Aufgrund der beschriebenen Biegestützkonstruktion kann sich der Wagen 11 in der durch den Doppelpfeil 25 angezeigten Richtung horizontal hin- und herbewegen. Die Antriebskraft für die Hin- und Herbewegung wird durch die in Fig. 1 als geschlossenes Gehäuse dargestellte Antriebseinheit 29 aufgebracht. Die Antriebseinheit 29 ist mittels des Horizontalarms 27, der auf einer Seite des Rahmenelementes 13 befestigt ist, mit dem Wagen 11 verbunden. Die Antriebseinheit 29 bewegt den Horizontalarm 27 in der Pfeilrichtung 25 hin und her, so dass der Wagen 11 gleichfalls hin- und herbewegt wird. Während der Bewegung des Wagens 11 werden die Druckhämmer 15 selektiv angezogen und/oder freigegeben, um in den vorherbestimmten Abständen auf dem Papier Abdruckpunkte zu bilden. Sobald der Wagen 11 in der einen oder anderen Richtung das Ende seines Bewegungsweges erreicht hat, wird der Aufzeichnungsträger um einen Schritt weiterbefördert. Durch die Bewegung der Druckhämmer 15 werden Punktreihen in vorbestimmten Abständen auf dem Aufzeichnungsträger abgedruckt. Eine untereinanderliegende Serie von Punktreihen bildet eine Zeichen-Zeile. Nachdem die Serie von Punktreihen gedruckt worden ist, wird das Papier um den gewünschten Zeilenabstand weiterbewegt, so dass die erste Punktreihe der nächsten Zeichen-Zeile gedruckt werden kann.

Wie bereits eingangs zum Stand der Technik erläutert, ist es bekannt, dass der durch die Motoren mit konstanter Drehzahl bewirkte schwingende Wagentransport eine echte sinusförmige Wellenform aufweist, was bedeutet, dass die Bewegungsgeschwindigkeit sich ständig ändert. Aufgrund dieser sich ständig ändernden, nicht linearen Wellenform mussten Fühler und/oder drucksynchronisierende Elektronikkreise eingesetzt werden.

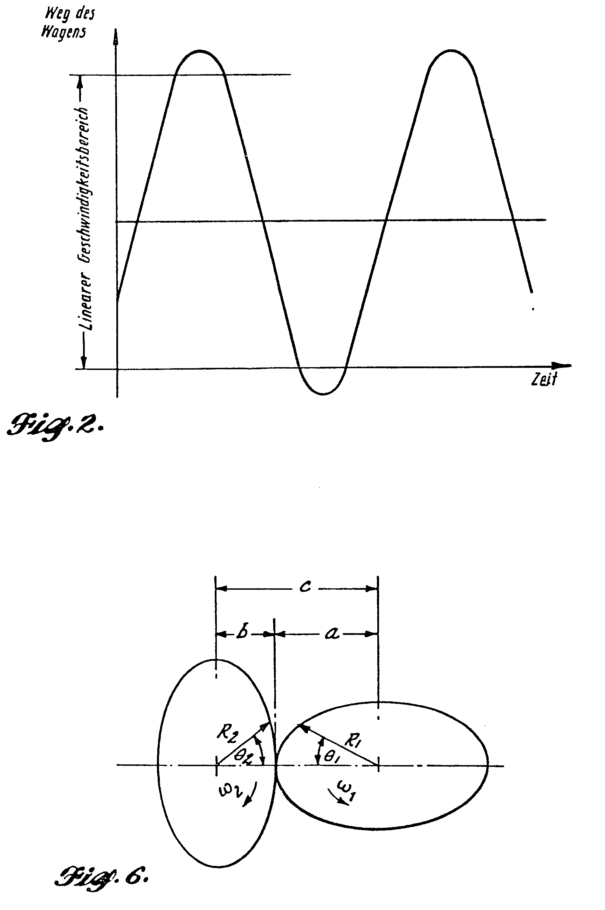

Die vorliegende Erfindung schafft ein mechanisches System, das zu einer dreieckförmigen Wellenform der Hin- und Herbewegung führt. Das bedeutet, dass die Wagenbewegungs-Wellenform linear wechselnde Bereiche aufweist, in denen der Wagen mit konstanter Geschwindigkeit fährt. Der Druck der Zeichen erfolgt in den Bereichen mit konstanter Geschwindigkeit. Dadurch können komplizierte Fühler- und Synchronisier-Steuersysteme entfallen. Fig. 2 zeigt ein Beispiel eines durch eine in zwei Richtungen mit konstanter Geschwindigkeit bewegbaren Pendelmechanismus' entsprechend der aufgrund der vorliegenden Erfindung gebildeten Bewegungswellenform. Genauer gesagt, zeigt Fig. 2 ein Kurvendiagramm mit Angabe der Zeit auf der Horizontalachse und Angabe des Weges des Wagens auf der
Vertikalachse. Die Wagenbewegungen verlaufen
über einen wesentlichen Teil eines Gesamtzyklusses der Wellenform linear. Lediglich die Spitzen
der Wellenform, in denen die Umkehr der Wagenbewegungsrichtung erfolgt, sind nicht linear.
Entsprechend ensteht eine im wesentlichen dreieckige Wellenform. Der lineare Geschwindigkeitsbereich ist in Fig. 2 eingezeichnet.

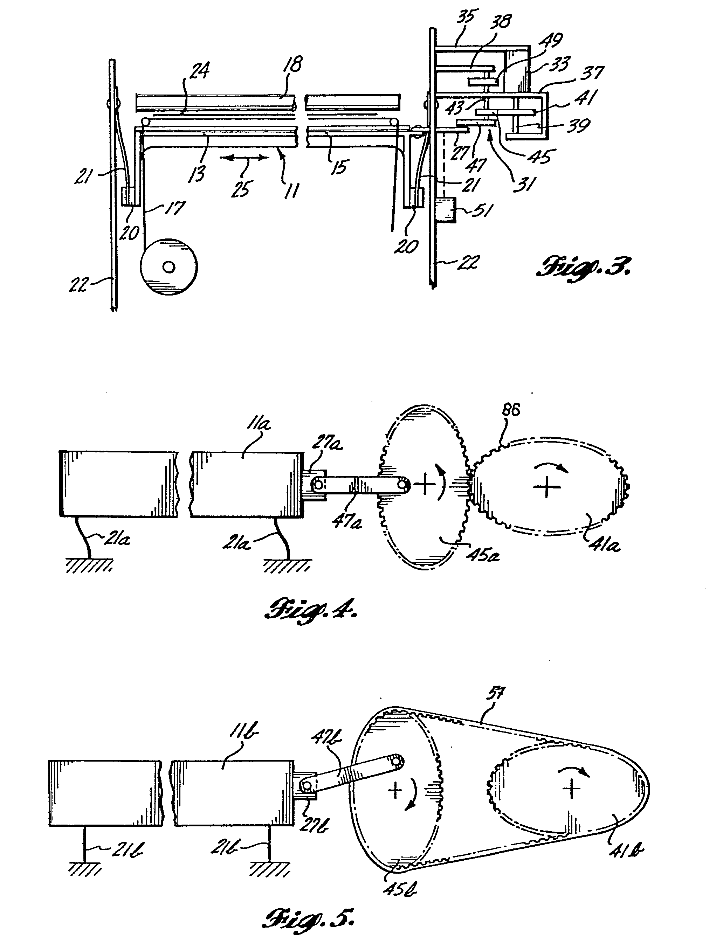

Fig. 3 zeigt den erfindungsgemässen Pendelmechanismus mit dem mit konstanter Geschwindigkeit in zwei Richtungen verfahrbaren Wagen
11. Der Pendelmechanismus 31 befindet sich innerhalb der Antriebseinheit 29. Zum besseren
Verständnis ist in Fig. 1 ein Teil der Punktmatrix-
drucker-Mechanik weggelassen worden. Ansonsten ist der in Fig. 3 dargestellte Teil des Punktmatrixdruckers der gleiche wie in Fig. 1. Demgemäss enthält der in Fig. 3 dargestellte Pendelmechanismus den Wagen 11 mit dem Rahmenelement 13, das mit Hilfe der Federstützen 19, die
vertikal verlaufen, und der Biegestäbe 21 am
Druckerrahmen 22 befestigt ist. Auf dem
Rahmenelement 13 des Wagens 11 sind die vertikal angeordneten Druckhämmer 15 in der Weise
montiert, dass ihre Druckambosse mit dem Farbband 15 ausgerichtet sind. Der Aufzeichnungsträger 24 liegt zwischen dem Farbband 17 und
der Walze 18 des Druckers. Der Horizontalarm 27,
der an dem einen Ende des Rahmenelementes 13
befestigt ist, verbindet den Wagen 11 mit dem in
zwei Richtungen mit konstanter Geschwindigkeit
Bewegungen erzeugenden Pendelmechanismus
31.

Dieser in zwei Richtungen mit konstanter Geschwindigkeit bewegbare Pendelmechanismus
31 enthält einen Elektromotor 33 (Gleichstrommotor) mit konstanter Drehzahl, der durch entsprechende Rahmenelemente 35 und 37 unterstützt wird, so dass die Welle 39 des Motors 33
horizontal und senkrecht zur Bewegungsachse
des Wagens 11 liegt. An der Welle 39 des Motors
33 montiert befindet sich das erste elliptische Antriebselement 41. Auf eine Antriebswelle 43 montiert, befindet sich das zweite, gleichgrosse elliptische Antriebselement 45. Die angetriebene Welle
43 liegt parallel zur Welle 39 des Motors 33 und
ist in entsprechenden Rahmenelementen 37 und
38 drehbar gelagert. Das erste und das zweite elliptische Antriebselement sind entweder direkt
gekuppelt oder über einen Antriebsriemen verbunden, wie nachstehend noch ausführlich beschrieben wird. Jedenfalls bewirkt eine Drehung
des ersten Antriebselements 41 eine Drehung des
zweiten elliptischen Antriebselementes 45. Das
zweite elliptische Antriebselement 45 ist über eine
Verbindungsstange 47 mit dem Horizontalarm 27
verbunden, der seinerseits an einem Ende des
Wagens 11 befestigt ist. Das bedeutet, wenn sich
das zweite elliptische Antriebselement 45 dreht,
wird der Wagen 11 in Richtung des Doppelpfeils
25 hin- und herbewegt.

Um die durch eine unausgeglichene Wagenbewegung verursachte Schwingung zu mindern, ist auf der Welle 43, auf der das zweite elliptische
Antriebselement 45 drehfest angeordnet ist, eine
Ausgleichsmasse 49 montiert.

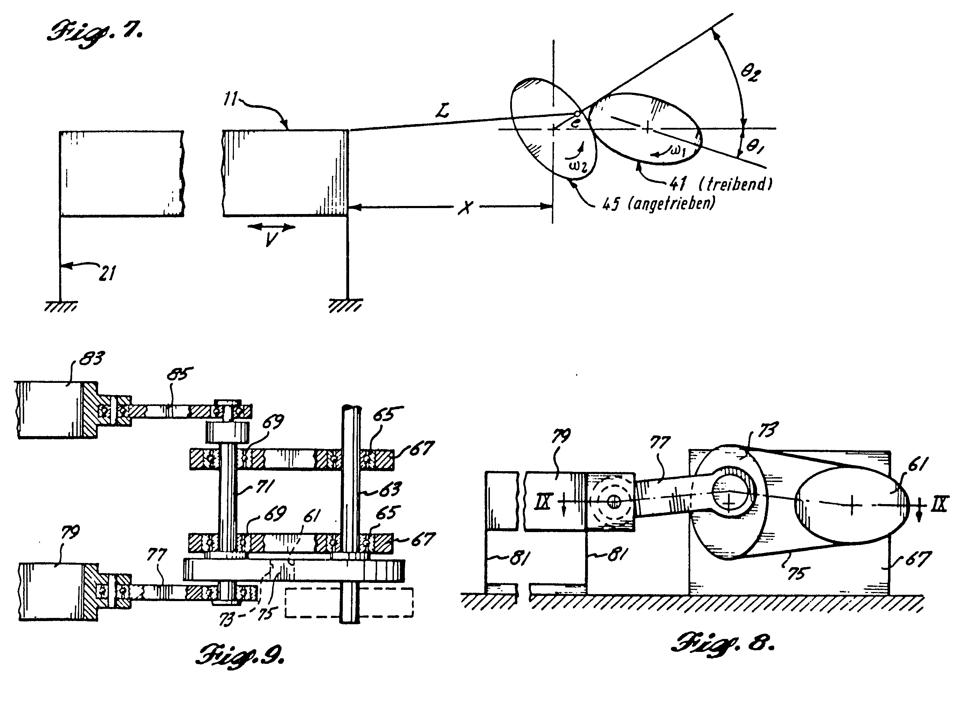

Fig. 4 zeigt eine schematische Darstellung der
unmittelbaren Kupplung zwischen dem ersten elliptischen Antriebselement 41a und dem zweiten
gleichgrossen elliptischen Antriebselement 45a.
Das Antriebselement 45a ist mittels der Verbindungsstange 47a mit dem Arm 27a verbunden,
der seinerseits auf einer Seite des Wagens 11a befestigt ist und durch ein Paar von Biegestäben
21a gestützt wird. Die Verbindungsstange 47a ist
auf beiden Seiten drehbar befestigt. Der Befestigungspunkt der Verbindungsstange 47a am Antriebselement 45a liegt auf einer Nebenachse des
Antriebselementes. Die Haupt- und Nebenachsen
der beiden elliptischen Antriebselemente sind um
90° phasenversetzt.

Fig. 5 zeigt eine Ausführungsform der Erfindung, in der das erste elliptische Antriebselement
41b mit dem zweiten gleichgrossen elliptischen
Antriebselement 45b mittels eines gezahnten
Zugmittels 57 verbunden ist. Das zweite
Antriebselement 45b ist mittels der Verbindungsstange 47b mit dem Arm 27b, der auf einer Seite
des Wagens 11b befestigt ist, verbunden. Der
Wagen 11b wird durch ein Paar Biegestäbe 21b
gestützt. Die Enden der Verbindungsstangen 47b
sind drehbar mit dem Arm 27b und dem zweiten
Antriebselement 45b verbunden. Der Befestigungspunkt der Verbindungsstange 47b mit dem
zweiten elliptischen Antriebselement 45b liegt auf
der grossen Hauptachse des zweiten elliptischen
Antriebselementes. Wie in Fig. 4 liegen die
Haupt- und Nebenachsen der beiden elliptischen
Antriebselemente 41b und 45b gemäss Fig. 5 um
90° phasenversetzt zueinander.

Wie erwähnt, handelt es sich bei dem Elektromotor 33, der das erste Antriebselement 41a oder
41b gemäss Fig. 4 und 5 dreht, um einen Motor
mit konstanter Drehzahl, so dass das angetriebene
Antriebselement mit konstanter Drehzahl rotiert.
Die jeweils zweiten Antriebselemente 45a und
45b werden jedoch nicht mit konstanter Drehzahl
rotiert. Dennoch wird der Wagen 11, 11a, 11b
(soweit er sich im Druckbereich bewegt) mit konstanter Geschwindigkeit bewegt. Die Wagenbewegung folgt der in Fig. 2 gezeigten Kurvenform,
die einem Dreieck stark angenähert und daher
kaum noch sinusförmig ist.

Diese Wirkung wird dadurch erzielt, dass sich
das Übersetzungsverhältnis zwischen dem ersten
und dem zweiten Antriebselement infolge deren
nicht kreisförmigen Form ständig ändert. Wenn
die beiden gleichgrossen elliptischen Antriebselemente die richtige Form haben, so kann ihr veränderliches Übersetzungsverhältnis und damit die
relative Drehzahl und Bewegung der beiden elliptischen Antriebselemente so geändert werden,
dass die Weg-Zeit-Kurve des Wagens 11 sich der
dreieckigen Form stark annähert und weniger die
nicht wünschenswerte sinusförmige Wellenform
erreicht. Eine vollkommen dreieckige Bewegungsform würde bedeuten, dass sich der Wagen
in jede Richtung mit konstanter Geschwindigkeit bewegt und eine momentane Richtungsumkehr aufweist. Eine solch perfekte Bewegung ist selbstverständlich mit Hilfe unkomplizierter mechanischer Mittel nicht perfekt zu erreichen. Eine vollkommen dreieckförmige Form der Bewegungswelle ist aber auch nicht erforderlich. Die Erfindung macht sich daher die konstante Bewegungsgeschwindigkeit im Druckbereich nutzbar.

Wie aus der vorliegenden Beschreibung ohne weiteres ersichtlich ist, dreht sich, da das elliptische Antriebselement, das mit konstanter Drehzahl umläuft, das gleichgrosse zweite elliptische Antriebselement bewegt, dieses bewegte Antriebselement mit einer dauernd sich ändernden Drehzahl, wobei zwei vollständige Drehzahländerungen pro Drehung des ersten elliptischen Antriebselementes auftreten.

Die Drehzahl des angetriebenen Rades und die exzentrische Verbindung ergeben eine zweite harmonische Komponente, die sich zu der konstanten Antriebsdrehzahl des ersten elliptischen Antriebselementes addiert. Die Winkelgeschwindigkeit des zweiten elliptischen Antriebselementes und somit der exzentrische Verbindungspunkt wird annähernd durch folgende Gleichung definiert:

$$\omega_2 = \omega_1 + B \cdot \cos(2\omega_1 t) \qquad (1)$$

wobei bedeuten:

$\omega_1$ = konstante Winkelgeschwindigkeit des ersten elliptischen Antriebselementes

B = Grösse der Drehzahlschwankung des zweiten elliptischen Antriebselementes, bestimmt durch die Form der Antriebselemente

t = Zeit.

(Die Gleichung (1) gibt eine annähernde Darstellung der Verhältnisse, da die Drehzahlabstimmung des zweiten elliptischen Antriebselementes nicht unbedingt als sinusförmig vorausgesetzt werden kann.)

Nachfolgend wird die Arbeitsweise der zwei gleichgrossen elliptischen Antriebselemente (zweiter Ordnung), die in der in Fig. 4 und 5 dargestellten Art, d.h. um 90° zueinander phasenversetzt verbunden sind, mathematisch erläutert.

Aus den Fig. 4 und 5 ist leicht ersichtlich, dass die 90°-Phase die einzige Stellung ist, in der die zwei Antriebselemente orientiert werden können und entweder unmittelbar oder mittels eines endlosen Zugmittels, das sich wenig oder gar nicht streckt, miteinander verbunden werden können. Bei Drehung von zwei Antriebselementen der in Fig. 4 und 5 dargestellten Art und Ausführung verändert sich der Radius auf einer Linie, die zwischen den beiden Antriebselementen verläuft, so dass der Radius eines Antriebselementes zunimmt, während der Radius des anderen elliptischen Antriebselementes in ausgleichender Form abnimmt oder umgekehrt. Dieser Grundsatz besitzt Gültigkeit, ganz gleich, ob die elliptischen Antriebselemente miteinander in Kontakt stehen Fig. 4) oder auseinander und mit einem Zugmittel verbunden sind (Fig. 5). In jedem Fall bleibt der Mittenabstand zwischen den beiden elliptischen Antriebselementen konstant. Wenn die Masse «a» und «b» (Fig. 6) die Länge der Haupt- und Nebenachsen der zwei gleichgrossen elliptischen Antriebselemente definieren, so lauten die Gleichungen in Polarkoordinatenform, die die Form der beiden Antriebselemente bestimmen, wie folgt:

$$R_1 = \frac{2ab}{a + b - (a - b)\cos 2\Theta_1} \qquad (2)$$

$$R_2 = \frac{2ab}{a + b - (a - b)\cos[2(\Theta_2 + \pi/2)]} \qquad (3)$$

Da der Mittenabstand «c» der elliptischen Antriebselemente an allen Punkten des Rotationszyklus' der beiden Antriebselemente konstant bleibt, bestimmt eine Definition dieses Abstandes für eine Stellung den Abstand «c» für alle Stellungen im Rotationszyklus.

Sind die Räder, wie in Fig. 6 gezeigt, miteinander in Eingriff, so wird der Mittenabstand «c» wie folgt bestimmt:

$$c = a + b \qquad (4)$$

oder

$$R_1 + R_2 = a + b \qquad (5)$$

Damit aus einem Paar gleichgrosser elliptischer Antriebselemente gebildetes Getriebe kontinuierlich bewegt werden kann, muss die Lineargeschwindigkeit für beide Antriebselemente im Berührungspunkt des Teilkreises gleich sein. Das bedeutet nicht, dass die beiden elliptischen Antriebselemente unbedingt die gleiche Drehgeschwindigkeit besitzen müssen, sondern dass das Produkt der Halbmesser zum Berührungspunkt multipliziert mit der Winkelgeschwindigkeit für beide elliptischen Antriebselemente gleich ist.

Mathematisch lässt sich diese Beziehung wie folgt ausdrücken:

$$\omega_1 R_1 = \omega_2 R_2 \qquad (6)$$

oder umgeformt:

$$\frac{\omega_2}{\omega_1} = \frac{R_1}{R_2} \qquad (7)$$

Durch Auflösung der Gleichung (5) für R und Einsetzen in die Gleichung (7) ergibt sich folgende Gleichung:

$$\frac{\omega_2}{\omega_1} = \frac{a + b - R_2}{R_2} \qquad (8)$$

Durch Substitution des Wertes R aus Gleichung (3) in Gleichung (8) und eine algebraische Umformung des Ergebnisses ergibt sich folgende Gleichung:

$$\frac{\omega_2}{\omega_1} = \frac{(a^2 + b^2) - (a^2 - b^2)\cos[2\,(\Theta_2 + \pi/2)]}{2ab} \qquad (9)$$

Für die beiden elliptischen Antriebselemente kann ein Verhältnis «r» als das Verhältnis des maximalen Zahnrad-Radius' zum minimalen Zahnrad-Radius definiert werden. Somit wird «r» mathematisch wie folgt definiert:

$$r = a/b \qquad (10)$$

Wird die Gleichung (9) durch b geteilt und der Wert von «r» aus Gleichung (10) für alle vorkommenden Fälle von a/b eingesetzt, so ergibt sich folgende Gleichung

$$\frac{\omega_2}{\omega_1} = \frac{(r^2 + 1) - (r^2 - 1)\cos[2(\Theta_2 + \pi/2)]}{2r} \qquad (11)$$

Die Gleichung (11) bestimmt die Winkelgeschwindigkeit des zweiten elliptischen Antriebselementes nach Winkellage und Winkelgeschwindigkeit $\omega_1$ des ersten elliptischen Antriebselementes.

Wie oben erwähnt, handelt es sich bei $\omega_1$ um eine Konstante.

Das Winkelgeschwindigkeitsverhältnis der zwei elliptischen Antriebselemente in Abhängigkeit der Winkelstellung des ersten elliptischen Antriebselementes wird auf ähnliche Weise abgeleitet und durch folgende Gleichungen dargestellt:

$$\frac{\omega_2}{\omega_1} = \frac{2r}{(r^2 + 1) + (1 - r^2)\cos 2\Theta_1} \qquad (12)$$

oder:

$$\omega_2 = \frac{2r\omega_1}{(r^2 + 1) + (1 - r^2)\cos 2\Theta_1} \qquad (13)$$

Mit Bezugnahme auf Fig. 7 ist leicht erkennbar, dass zur Bestimmung der Wagenstellung zu einer beliebigen Zeit folgende Werte bekannt sein müssen: Die Länge der Verbindungsstange, mit «L» bezeichnet, die das zweite elliptische Antriebselement mit dem Wagen 11 verbindet, ferner der exzentrische Abstand zwischen dem Befestigungspunkt der Stange (27; 47a, 47b, 77) am zweiten elliptischen Antriebselement und der Rotationsmitte «e» des zweiten elliptischen Antriebselementes; ferner der Winkel zwischen einer Bezugslinie, die zwischen der Rotationsmitte «e» des ersten und des zweiten elliptischen Antriebselementes verläuft und dem Exzenter gegenüber der Zeit $\Theta_2$. Da $\omega_2$ keine Konstante ist, muss zur Bestimmung von $\Theta_2$ die Gleichung (13) integriert werden. Dazu ist von folgender Gleichung auszugehen:

$$\Theta_2 = \int_0^t \omega_2 dt \qquad (14)$$

oder:

$$\Theta_2 = \int_0^t \frac{2r\omega_1 \cdot dt}{(r^2 + 1) + (1 - r^2)\cos 2\Theta_1} \qquad (15)$$

Da $\omega_1$ eine Konstante ist, ist die Winkelstellung des ersten elliptischen Antriebselementes zur Zeit $\Theta_1 = \omega_1 \cdot t$. Somit kann die Gleichung (15) umgeformt werden in:

$$\Theta_2 = \int_0^t \frac{2r\omega_1 dt}{(r^2 + 1) + (1 - r^2)\cos(2\omega_1 t)} \qquad (16)$$

Integration und Umformung der gewonnenen Ausdrücke aus Gleichung (16) ergeben folgende Gleichung:

$$\Theta_2 = \tan^{-1}[r \cdot \tan(\omega_1 \cdot t)] \qquad (17)$$

Die Stellung «x» des Wagens 11 zu irgendeinem Zeitpunkt wird durch folgende Gleichung bestimmt:

$$X = L - e\cos\Theta_2 \qquad (18)$$

Durch Substitution des Wertes $\Theta_2$ entsprechend der Definition in Gleichung (17) in Gleichung (18) wird folgende Gleichung erhalten:

$$X = L - e\cos\{\tan^{-1}[r \cdot \tan(\omega_1 \cdot t)]\} \qquad (19)$$

Die Geschwindigkeit $V_x$ des Wagens 11 ist die zeitliche Ableitung der Gleichung 19, während die Geschwindigkeit des Wagens 11 zur Winkelstellung des getriebenen elliptischen Antriebselementes durch folgende Gleichung bestimmt wird:

$$V_x = \frac{e\omega_1 \sin\Theta_2}{2r}\left\{ (r_2 + 1) - (r_2 - 1)\cos[2(\theta_2 + \pi/2)] \quad (20) \right\}$$

Die Gleichungen (19) und (20) sowie die konstanten Werte für $\omega_1$, e, L, lassen sich zur Bewertung aller elliptischen Antriebselement-Paare mit spezifizierten Werten für «a» und «b» einsetzen, um festzustellen, wie sie sich in einem Pendelmechanismus entsprechend der vorliegenden Erfindung verhalten werden. Das bedeutet, dass diese Werte eingesetzt werden können, um zu beurteilen, wie nach ein ausgesuchtes Paar gleichgrosser elliptischer Antriebselemente an die in Fig. 2 dargestellte Weg-Zeit-Kurve heranreicht. Es lassen sich unterschiedliche a- und b-Werte verwenden.

In der praktischen Ausführung der Erfindung wurde beispielsweise ein Faktor $a = 1,007$ und ein Faktor $b = 0,7688$ eingesetzt. Bei einer Gesamtoszillation von 1,36 652 mm entsprach $e = 0,68 326$ mm und $\omega_1 = 300$ Umdrehungen pro Minute.

Die beschriebene Anordnung von elliptischen Antriebselementen wurde gewählt, weil sie eine verhältnismässig lange Periode erzeugt, während der sich die Wagengeschwindigkeit nur gering verändert. In dem relativ langen Zeitraum der fast konstanten Geschwindigkeit verläuft die Weg-Zeit-Kurve der Wagenbewegung fast linear, was bedeutet, dass über den grössten Teil des Bewegungszyklus' gerade Seitenlinien vorliegen. Mit anderen Worten ausgedrückt, ergibt sich eine Wagenbewegungs-Wellenform, ähnlich der in Fig. 2 gezeigten.

Während die in den Fig. 3, 4 und 5 dargestellte Verbindungsstange (27, 47a, 47b, 77) starr ist, kann diese, falls dies erwünscht ist, aus zwei Federstäben gebildet werden, die den Exzenterpunkt «e» des angetriebenen elliptischen Antriebselementes mit dem Wagen verbinden. Eine solche Biegekupplung hat den Vorteil, dass nur auf einer Seite der Stange ein Lager benötigt wird.

Wegen der linearen Wagenbewegung und der mechanischen Kopplung des Wagens 11 an die Antriebseinheit 29 benötigt die Erfindung, wie bereits erwähnt, keinen Stellungsfühler für das dauernde Abtasten der Wagenstellung, was erforderlich ist, um den Betrieb der Druckhämmer 15 zu synchronisieren. Während also eine dauernde Wagenstellungs-Abtastung nicht erforderlich ist, ist jedoch ein Stellungsfühler zum Abtasten der äussersten Seitenstellung des Wagens oder des Anfangs der linearen Bereiche, innerhalb deren gedruckt wird, wünschenswert. Fig. 3 zeigt in schematischer Darstellung einen Stellungsfühler 51, der auf dem Druckerrahmen 22 montiert ist. Dieser Stellungsfühler 51 kann aus einem optischen Fühler, einem magnetischen Fühler oder einem anderen geeigneten Fühler bestehen, von dem in jedem Fall ein Impuls ausgeht, wenn der Wagen eine seiner Endstellungen erreicht. Falls dies gewünscht wird, kann an einem Ende des Bewegungsweges des Wagens ein einfacher Impuls und am anderen Ende können zwei schnell hintereinander folgende Impulse erzeugt werden, um die beiden extrem seitlichen Stellungen des Wagens zu definieren.

Der Wagen 11 kann auch mit eigener Resonanzfrequenz gefahren werden. Es ist jedoch auch möglich, den Wagen mit einer ausserhalb des Resonanzfrequenz-Bereiches liegenden Frequenz zu bewegen. Es ist einleuchtend, dass, wenn ein gefedertes Massensystem wie ein auf Biegestützen 19 montierter Wagen 11 mit Eigenresonanzfrequenz bewegt wird, die Wagenschwingungskraft dazu neigt, sich aufzuschaukeln. Wird der Pendelmechanismus mechanisch, beispielsweise mit Hilfe von Biegestäben 21 eingespannt, so wird die Kraft, die auf die Biegestäbe wirkt, infolge der sich aufschaukelnden Schwingungskräfte auf ein Maximum erhöht. Bei einem Drucker bedeuten erhöhte Beanspruchungskräfte, die durch einen mit seiner Eigenfrequenz schwingenden Wagen verusacht werden, grössere Durchbiegungen des Druckerrahmens. Durchbiegungen dieser Art lassen sich durch energieabsorbierende Dämpfungsmittel an den Enden des Wagenbewegungsweges wesentlich verringern. Der Einsatz dieser Dämpfungsmittel reduziert die Amplitude der Wagenbewegung und fängt diese auf. Die Grösse der durch die Wagenbewegung verursachten baulichen Verformung lässt sich weiterhin durch Versteifung der schwingenden Elemente, wie beispielsweise des Rahmens reduzieren.

Dieses Problem lässt sich jedoch leicht dadurch lösen, dass man den Wagen 11 mit einer Geschwindigkeit antreibt, die weit unterhalb oder oberhalb der Resonanzgeschwindigkeit liegt. Im letzteren Fall verläuft die Wagen-Weg-Zeit-Kurve äusserst geradseitig und gleichmässig, wie in Fig. 2 gezeigt, und zwar ohne Verwendung von Dämpfungsmitteln oder zusätzlichen Versteifungen. Die elliptischen Antriebselemente gemäss der Erfindung sind aus verschiedenen Materialien hergestellt. Für die Ausführungsform der Erfindung, in der die Antriebselemente unmittelbar zusammenwirken, werden ungleiche Werkstoffe verwendet. Beispielsweise kann eines der Antriebselemente aus einem bestimmten Kunststoff und das andere aus einem anderen Kunststoff hergestellt werden. Eine solche spezielle Materialverbindung wird deshalb verwendet, weil diese einen äusserst geringen Verschleiss besitzt und die Antriebselement-Paarungen über einen langen Zeitraum betriebsfähig bleiben.

Bei der Ausführungsform der Erfindung mit einem Zugmittel 57 gemäss Fig. 5 wird das Zugmittel ebenfalls aus Kunststoff hergestellt. In beiden Fällen werden die elliptischen Antriebselemente mit einer geraden Anzahl von Zähnen versehen. Eine gerade Zähnezahl wird deshalb vorgeschlagen, weil solche Antriebselemente leichter herzustellen sind als Antriebselemente mit einer ungeraden Zahl von Zähnen. Dieser Vorschlag schliesst jedoch nicht aus, die elliptischen Antriebselemente auch mit einer ungeraden Zahl von Zähnen anzufertigen, falls dies gefordert wird. Die Ausführungsform der Erfindung in Verbindung mit dem Zugmittel 57 erfordert selbstverständlich eine gerade Anzahl von Zähnen, um die als Scheiben ausgeführten elliptischen Antriebselemente in die gewünschte 90°-Phasenversetzung zu bringen und in dieser zu halten. Bei der Ausführungsform der Erfindung aufgrund des Zugmittels 57 muss der Umfang der elliptischen Antriebselemente (an der Teilfläche) darüber hinaus ein ganzzahliges Mehrfaches der Teilung des Zugmittels sein. Unter der Teilung des Zugmittels wird der Abstand zwischen den gleichen Punkten an benachbarten Zähnen verstanden.

Grundsätzlich kann der exzentrische Befestigungspunkt «e» entweder auf der Haupt- oder Nebenachse des angetriebenen elliptischen Antriebselementes für eine Hin- und Herbewegung bei konstanter Geschwindigkeit angeordnet sein. Ein gewisser mechanischer Vorteil ergibt sich jedoch während der Bewegungsumkehr des Wagens 11, wenn der Befestigungspunkt bei der Ausführungsform der unmittelbaren Kopplung der beiden elliptischen Antriebselemente auf der Nebenachse liegt und bei der Ausführungsform der Erfindung auf der Grundlage des Zugmittels 57, wenn der Befestigungspunkt «e» auf der Hauptachse liegt. Auf diese Weise tritt die grösste Winkelgeschwindigkeitsänderung im angetriebenen elliptischen Antriebselement bzw. in dem mittels des Zugmittels 51 angetriebenen elliptischen Antriebselement während der Umkehrbewegung ein. Ein weiterer mechanischer Vorteil wird ausserdem in einer geringeren Streckung des Zugmittels 57 und geringen Änderungen in der Drehzahl während eines vollständigen Rotationszyklus' erreicht.

Wie in Fig. 3 dargestellt und bereits erwähnt, enthält ein in zwei Richtungen mit konstanter Geschwindigkeit bewegbarer Pendelmechanismus gemäss der Erfindung eine Ausgleichsmasse 49, um die aus der Wagenbewegung resultierende Schwingung zu vermindern.

Die Figuren 8 und 9 zeigen eine alternative Ausführungsform zur Erzielung des gleichen Erfolges, d.h. zur Erzielung einer Schwingungsverminderung. Genauer gesagt zeigen die Fig. 8 und 9 ein erstes elliptisches Antriebselement 61, das auf einer ersten Welle 63, die von einem Motor mit konstanter Drehzahl angetrieben wird, montiert ist (in den Fig. 8 und 9 nicht dargestellt). Die erste Welle 63 ist zwecks Rotation in den Lagern 65, die sich in den Rahmenelementen 67 abstützen, montiert. Die Rahmenelemente 67 unterstützen weitere Lager 69, die ihrerseits eine zweite Welle 71 tragen. Die zweite Welle 71 liegt parallel zur ersten Welle 63. Ein zweites elliptisches Antriebselement 73 von gleicher Grösse wie das erste Antriebselement 61 ist fluchtend mit dem ersten Antriebselement 61 auf der zweiten Welle 71 montiert. Das erste und das zweite Antriebselement sind durch ein gezahntes Zugelement 75 miteinander verbunden. Eine erste Verbindungsstange 77, deren eines Ende exzentrisch und drehbar mit dem zweiten Antriebselement 73 verbunden ist, verbindet das zweite Antriebselement mit einem Ende des Wagens 79. Die erste Verbindungsstange 77 ist am Wagen 79 gleichfalls drehbar. Der Wagen 79 wird durch Biegestäbe 81 abgestützt.

Es ist einleuchtend, dass der in zwei Richtungen mit konstanter Geschwindigkeit verfahrbare, in den Figuren 8 und 9 gezeigte Pendelmechanismus generell der in Fig. 3 gezeigten Einrichtung gleicht. Anstelle einer Ausgleichsmasse 49 enthält der in den Fig. 8 und 9 gezeigte, in zwei Richtungen mit konstanter Geschwindigkeit bewegbare Pendelmechanismus jedoch einen Gegengewichtswagen 83, der exzentrisch mittels einer zweiten Verbindungsstange 85 an der zweiten Welle 71 befestigt ist. Der exzentrische Befestigungspunkt der zweiten Verbindungsstange 85 ist drehbar und um 180° phasenversetzt gegenüber dem exzentrischen Verbindungspunkt zwischen der ersten Verbindungsstange 77 und dem zweiten elliptischen Antriebselement 73. Hierbei ist die durch den Gegengewichtswagen 83 erzeugte Gegengewichtskraft genau so gross, wie die vom Wagen 11 erzeugte Kraft. Diese Wirkung wird beispielsweise dadurch erzielt, dass die Masse des Gegengewichtswagens 83 der Masse des Wagens 11 entspricht, ferner die erste und die zweite Verbindungsstange 77 bzw. 85 die gleiche Länge L haben, die Exzenterabstände «e» gleich sind und der Gegengewichtswagen 83 auf die gleiche Weise wie der Wagen 11 schwingbar unterstützt wird. Selbstverständlich können auch andere Vorkehrungen getroffen werden, um den gleichen Massenausgleich zu erzielen.

Aus der vorstehenden Beschreibung ergibt sich, dass die Erfindung sich auf eine mechanische Einrichtung zur Bewegung des Wagens 11 bezieht. Auch wenn der Wagen 11 aufgrund des Ausführungsbeispiels durch Biegestäbe unterstützt wird, kann er auch durch gleichwertige Einrichtungen, wie beispielsweise Schlitten, getragen werden. Die Erfindung ist auf eine hin- und hergehende Bewegung (Pendelbewegung) des Wagens 11 mit konstanter Geschwindigkeit über einen wesentlichen Teil des vom Wagen zurückgelegten Weges abgestimmt. Daraus ergibt sich wiederum, dass, wenn die Erfindung beispielsweise zur Bewegung des Wagens in einem Drukker eingesetzt wird, komplizierte Steuereinrichtungen entfallen. Dieser Wirkung liegt der Gedanke zugrunde, dass der Wagen über den Teil der Wegstrecke, in der gedruckt wird, sich linear bewegt und somit eine lineare Steuerung ausgenutzt werden kann. Allenfalls werden in den beiden Endstellungen Synchronisierimpulse erforderlich.

Bei Einsatz der Erfindung in einem Drucker kann sowohl die unmittelbar gekoppelte Ausführungsform der Erfindung (Fig. 4) oder die mittels Zugmittel 57 gekoppelte Ausführungsform der Erfindung (Fig. 5) verwendet werden, wobei der Riemenantrieb bestimmte Vorteile gegenüber dem zahnradgekoppelten Antrieb hat. So ist der Antrieb mittels des Zugmittels 57 gegenüber Zahnrädern leiser. Darüber hinaus besitzt der Antrieb mittels eines Zugmittels eine grössere Kraftübertragungsleistung, weil der Koppelungsbereich zwischen dem Zugmittel und den elliptischen Antriebselementen erheblich grösser ist als der Eingriffsbereich zwischen den Zahnrädern. Auch werden bei der Verwendung von Zugmitteln 57 die konzentrierten Spannungen geringer. Zwei mittels Zugmitteln 57 gekoppelte elliptische Antriebselemente lassen sich weniger genau herstellen als genau zu bearbeitende Zahnräder.

Nachdem die einzelnen Ausführungsformen der Erfindung in der Zeichnung dargestellt und beschrieben worden sind, ist erkenntlich, dass sich die unterschiedlichsten Änderungen durchführen lassen. Beispielsweise können die eine konstante Geschwindigkeit gewährleistenden Bewegungseinrichtungen aufgrund der Erfindung auch an anderer Stelle als in den Endbereichen des zu bewegenden Wagens 11 eingesetzt werden. Sie können beispielsweise unter den Wagen montiert und durch geeignete Mittel mit dem Wagen verbunden werden, um die Drehbewegung des Befestigungspunktes «e» an dem zweiten elliptischen Antriebselement in lineare Bewegungen umzusetzen. Auch kann, falls dies erforderlich wird, ein Zugmittel ohne Zähne mit elliptischen Antriebselementen ohne Zähne anstelle der gezahnten Teile verwendet werden. Selbstverständlich kann eine abgewandelte Ausführungsform der Erfindung nur eingesetzt werden, wenn der Wagen ohne Schlupf bewegt werden kann. Andererseits kann die Erfindung anstelle eines gezahnten oder ungezahnten Zugmittels 57 als Kopplungseinrichtung zwischen gezahnten elliptischen Antriebselementen in Verbindung mit Ketten ausgeführt werden, welche eine noch grössere Kraftübertragung gewährleisten als ein Zugmittel mit Zähnen. Mit anderen Worten kann die Erfindung auch auf andere Weise als hier in den Ausführungsbeispielen beschrieben, ausgeführt werden.

## Patentansprüche

1. Pendelmechanismus für geradlinige Hin- und Herbewegungen eines Matrixdrucker-Schlittens bzw. eines Matrixdrucker-Wagens (11) mit Druckhämmern (15), mit einem Antrieb zur Bewegung hin und her in Zeilenrichtung bei konstanter Geschwindigkeit und mit einem schrittweise vorschiebbaren Aufzeichnungsträger senkrecht zur Zeilenrichtung, dadurch gekennzeichnet, dass der Antrieb für die Hin- und Herbewegung mittels eines ersten, an einen Drehantrieb (33) für konstante Drehgeschwindigkeit angeschlossenen elliptischen zweinockigen Antriebselementes (41; 41a; 41b; 61) zweiter Ordnung und mittels eines gleichgrossen zweiten elliptischen zweinockigen Antriebselementes (45; 45a; 45b; 73) zweiter Ordnung gebildet ist, dass das erste und das zweite elliptische zweinockige Antriebselement (41; 41a; 41b; 61; 45; 45a; 45b; 73) mit ihren Ellipsen-Hauptachsen in einer der Grundstellungen um 90° phasenversetzt zueinander stehen, dass Verbindungsmittel (57; 75; 86) zum Antrieb des zweiten durch das erste elliptische zweinockige Antriebselement vorgesehen sind und dass das zweite elliptische zweinockige Antriebselement (45; 45a; 45b; 73) mit einem exzentrisch befestigten Glied (27; 47a; 47b; 77) an das zu bewegende Organ (11; 11a; 11b) angeschlossen ist.

2. Pendelmechanismus nach Anspruch 1, dadurch gekennzeichnet, dass das erste und zweite elliptische Antriebselement (41; 41a; 41b; 61–45; 45a; 45b; 73) als Verbindungsmittel jeweils eine Verzahnung (86) aufweisen.

3. Pendelmechanismus nach den Ansprüchen 1 und 2, dadurch gekennzeichnet, dass das Verbindungsmittel für das erste und zweite elliptische Antriebselement (41; 41a; 41b; 61–45; 45a; 45b; 73) aus einem Zugmittel (57) besteht.

4. Pendelmechanismus nach den Ansprüchen 1 bis 3, dadurch gekennzeichnet, dass das Zugmittel (57) ebenfalls mit einer Verzahnung (86) versehen ist.

5. Pendelmechanismus nach den Ansprüchen 1 bis 4, dadurch gekennzeichnet, das die Zähnezahlen des verzahnten Zugmittels (57) sowie des ersten und zweiten elliptischen Antriebselements jeweils gerade sind.

6. Pendelmechanismus nach den Ansprüchen 1 bis 5, dadurch gekennzeichnet, dass das exzentrisch auf dem zweiten elliptischen Antriebselement (45; 45a; 45b; 73) befestigte Glied aus einer Stange (27; 47a; 47b; 77) besteht.

7. Pendelmechanismus nach den Ansprüchen 1 bis 6, dadurch gekennzeichnet, dass an dem zweiten elliptischen Antriebselement (45; 45a; 45b; 73) für die Anlenkung des Verbindungsmittels an das zu bewegende Organ des Druckers eine exzentrische Nebenachse (71) vorgesehen ist.

8. Pendelmechanismus nach den Ansprüchen 1 bis 7, dadurch gekennzeichnet, dass auf der Welle (43), auf der das zweite Antriebselement (45; 45b; 45b; 73) drehfest angeordnet ist, eine Ausgleichsmasse (49) vorgesehen ist.

9. Pendelmechanismus nach den Ansprüchen 1 bis 8, dadurch gekennzeichnet, dass die erzeugte Weg-Zeit-Kurve des zu bewegenden Organs des Druckers (11; 11a; 11b) einem dreieckförmigen Verlauf angenähert ist.

10. Pendelmechanismus nach den Ansprüchen 1 bis 9, dadurch gekennzeichnet, dass in der Grundstellung der Faktor «a» für den Radius (R1) des ersten elliptischen Antriebselementes (41; 41a; 41b; 61) im Bereich von 1,007 und der entsprechende Faktor «b» für den Radius (R2) des zweiten elliptischen Antriebselementes (45; 45a; 45b; 73) im Bereich von 0,7688 gewählt ist.

11. Pendelmechanismus nach den Ansprüchen 1 bis 10, dadurch gekennzeichnet, dass an dem Druckerrahmen (22) ein auf das Glied (27, 47a; 47b; 77) gerichteter Stellungsfühler (51) angeordnet ist.

12. Pendelmechanismus nach den Ansprüchen 1 bis 11, dadurch gekennzeichnet, dass an den Endbereichen des Bewegungsweges des zu bewegenden Organs (11; 11a; 11b) Dämpfungsmittel angeordnet sind.

13. Pendelmechanismus nach den Ansprüchen 1 bis 12, dadurch gekennzeichnet, dass als Massenausgleich für das zu bewegende Organ (11; 11a; 11b) mittels einer Verbindungsstange (85) an der angetriebenen Welle (71), auf der das zweite elliptische Antriebselement (45; 45a; 45b; 73) drehfest angeordnet ist, ein Gegengewichtswagen (83) befestigt ist.

14. Pendelmechanismus nach den Ansprüchen 1 bis 13, dadurch gekennzeichnet, dass das zu bewegende Organ (11; 11a; 11b) auf Biegestäben (21; 21a; 21b) gelagert ist.

## Revendications

1. Mécanisme à navette pour mouvements linéaires alternatifs d'un chariot d'imprimante à matrice de points (11) comportant des marteaux d'impression (W), avec un entraînement du mouvement de va-et-vient dans le sens des lignes à vitesse constante et avec un support de bande de papier déplaçable vers l'avant pas à pas perpendiculairement au sens des lignes, caractérisé en ce que l'entraînement du mouvement de va-et-vient est constitué par un premier élément d'entraînement (41, 41a, 41b, 61) elliptique à deux cames, de second ordre, raccordé à une commande de rotation (33) pour vitesse de rotation constante, et par un second élément d'entraînement elliptique à deux cames de même grandeur (45, 45a, 45b, 73), de second ordre, en ce que le premier et le second élément d'entraînement elliptique à deux cames (41, 41a, 41b, 61, 45, 45a, 45b, 73) se trouvent avec leurs axes principaux d'ellipse dans une des positions de base en décalage de phase de 90° l'un par rapport à l'autre, en ce que des moyens de liaison (57, 75, 86) pour l'entraînement du second élément par le premier élément elliptique à deux cames sont prévus et en ce que le second élément elliptique à deux cames (45, 45a, 45b, 73) est raccordé à l'organe à mouvoir (11, 11a, 11b) au moyen d'un élément (27, 47a, 47b, 77) fixé extrémiquement.

2. Mécanisme à navette selon la revendication 1, caractérisé en ce que le premier et le second élément d'entraînement elliptique (41, 41a, 41b, 61-45, 45a, 45b, 73) comportent chacun comme moyen de liaison une denture (86).

3. Mécanisme à navette selon les revendications 1 et 2, caractérisé en ce que le moyen de liaison pour le premier et le second élément d'entraînement elliptique (41, 41a, 41b, 61-45, 45a, 45b, 73) est consitué d'un moyen de traction (57).

4. Mécanisme à navette selon les revendications 1 à 3, caractérisé en ce que le moyen de traction (57) est lui aussi muni d'une denture (86).

5. Mécanisme à navette selon les revendications 1 à 4, caractérisé en ce que le nombre des dents du moyen de traction denté (57), ainsi que du premier et du second élément d'entraînement elliptique est pour chacun un nombre pair.

6. Mécanisme à navette selon les revendications 1 à 5, caractérisé en ce que l'élément fixé excentriquement sur le second élément d'entraînement elliptique (45, 45a, 45b, 73) est constitué d'une barre (27, 47a, 47b, 77).

7. Mécanisme à navette selon les revendications 1 à 6, caractérisé en ce que sur le second élément d'entraînement elliptique (45, 45a, 45b, 73) est prévu un axe auxiliaire excentrique (71) pour le raccordement du moyen de traction à l'organe à mouvoir de l'imprimante.

8. Mécanisme à navette selon les revendications 1 à 7, caractérisé en ce que sur l'arbre (43) sur lequel est fixé rigide à la rotation le second élément d'entraînement (45, 45a, 45b, 73) est prévue une masse d'équilibrage (49).

9. Mécanisme à navette selon les revendications 1 à 8, caractérisé en ce que la courbe course/temps produite de l'organe à mouvoir de l'imprimante (11, 11a, 11b) présente approximativement l'allure d'un triangle.

10. Mécanisme à navette selon les revendications 1 à 9, caractérisé en ce que le – facteur «a» pour le rayon (R1) du premier élément d'entraînement elliptique (41, 41a, 41b, 61) est choisi autour de 1,007 et le – facteur «b» correspondant dans la position de base pour le rayon (R2) du second élément d'entraînement elliptique (45, 45a, 45b, 73), autour de 0,7688.

11. Mécanisme à navette selon les revendications 1 à 10, caractérisé en ce que sur le châssis (22) de l'imprimante est installé un détecteur de position (51) orienté en direction de l'élément (27, 47a, 47b, 77).

12. Mécanisme à navette selon les revendications 1 à 11, caractérisé en ce que dans la zone des extrémités de la course du mouvement de l'organe (11, 11a, 11b) à mouvoir sont installés des moyens d'amortissement.

13. Mécanisme à navette selon les revendications 1 à 12, caractérisé en ce que pour l'équilibrage de masse pour l'organe à mouvoir (11, 11a, 11b) au moyen d'une barre de liaison (85), un chariot à contrepoids (83) est fixé sur l'arbre entraîné (71) sur lequel est installé rigide à la rotation le second élément d'entraînement elliptique (45, 45a, 45b, 73).

14. Mécanisme à navette selon les revendications 1 à 13, caractérisé en ce que l'organe à mouvoir (11, 11a, 11b) est monté sur des tiges flexibles (21, 21a, 21b).

**Claims**

1. Shuttle mechanism for straightline to and fro movements of a matrix printer slide and/or a matrix printer carriage (14) with printing hammers (15), with a drive for movement to and fro in the direction of the lines, at constant speed and with a vertically to the direction of the lines stepwise advancable recording material, characterized by the drive for the to and fro movement being formed by a first elliptical two-cam drive element (41; 41a; 41b; 61) of second order, connected to a rotating drive (33) to ensure constant rotary speed, and an equally sized second elliptical two-cam drive element (45; 45a; 45b; 73) of second order; the first and the second elliptical two-came drive elements (41; 41a; 41b; 61; 45; 45a; 45b; 73) being phase-shifted 90° relative to each other when their ellipses main axes are in one of the basic positions; connecting means (57; 75; 86) being provided for driving the second through the first elliptical two-cam drive element and the second elliptical two-cam drive element (45; 45a; 45b; 73) being connected to the organ to be moved (11; 11a; 11b) with the help of an eccentrically mounted element (27; 47a; 47b; 77).

2. Shuttle mechanism according to claim 1, characterized by the first and second elliptical drive elements (41; 41a; 41b; 61-45; 45a; 45b; 73) each having a toothing (86) as connecting means.

3. Shuttle mechanism according to claims 1 and 2, characterized by the connecting means for the first and second elliptical drive elements (41;

41a; 41b; 61-45; 45a; 45b; 73) consisting of traction means (57).

4. Shuttle mechanism according to claims 1 to 3, characterized by the connecting means (57) likewise being provided with a toothing (86).

5. Shuttle mechanism according to claims 1 to 4, characterized by the number of teeth of the toothed traction means (57) and of the first and second elliptical drive elements being even in each case.

6. Shuttle mechanism according to claims 1 to 5, characterized by the element that is eccentrically mounted on the second elliptical drive element (45; 45a; 45b; 73) consisting of a rod (27; 47a; 47b; 77).

7. Shuttle mechanism according to claims 1 to 6, characterized by the second elliptical drive element (45; 45a; 45b; 73) having an eccentric slave axis (71) for linking the connecting means to the organ of the printer to be moved.

8. Shuttle mechanism according to claims 1 to 7, characterized by the shaft (43) on which the second drive element (45; 45a; 45b; 73) is mounted torsionally stiff, having an equalizing mass (49).

9. Shuttle mechanism according to claims 1 to 8, characterized by the generated path/time curve of the organ of the printer to be moved (11; 11a; 11b) approximating a triangular course.

10. Shuttle mechanism according to claims 1 to 9, characterized by the factor «a» for the radius (R1) of the first elliptical drive element (41; 41a; 41b; 61), in the basic position, being selected in the order of 1.007 and the corresponding factor «b» for the radius (R2) of the second elliptical drive element (45; 45a; 45b; 73) in the order of 0.7688.

11. Shuttle mechanism according to claims 1 to 10, characterized by a position sensor (51) pointing towards the element (27; 47a; 47b; 77) being arranged on the printer frame (22).

12. Shuttle mechanism according to claims 1 to 11, characterized by damping means being provided at the ends of the movement path of the organ to be moved (11; 11a; 11b).

13. Shuttle mechanism according to claims 1 to 12, characterized by a counterweight-carriage (83) for use as mass equalization for the organ to be moved (11; 11a; 11b) being fixed by means of a connecting rod (85) to the driven shaft (71) on which the second elliptical drive element (45; 45a; 45b; 73) is arranged torsionally stiff-fashion.

14. Shuttle mechanism according to claims 1 to 13, characterized by the organ to be moved (11; 11a; 11b) being mounted on flexing bars (21; 21a; 21b).

Fig. 1.

Fig. 2.

Fig. 6.

Fig.3.

Fig.4.

Fig.5.

Fig. 7.

Fig. 8.

Fig. 9.